# EUROPEAN PATENT SPECIFICATION

(11) **EP 0 469 126 B1**
(45) Date of publication and mention of the grant of the patent: **08.06.1994**
(21) Application number: 91904743.1
(22) Date of filing: 20.02.1991
(51) Int. Cl.: G02B 6/28, G02B 6/42, H04J 14/02, H04B 10/12

(54) **OPTICAL DUPLEXER**
OPTISCHER DUPLEXER
DUPLEXEUR OPTIQUE

(30) Priority: 20.02.1990 GB 9003795
(43) Date of publication of application: 05.02.1992
(73) Proprietor: GEC-MARCONI LIMITED, Stanmore, Middlesex HA7 4LY (GB)
(72) Inventor: WALKER, Robert, Graham, Northampton NN3 2QY (GB)
(74) Representative: Pope, Michael Bertram Wingate
(86) International application number: GB9100259
(87) International publication number: WO9113376

(56) References cited:
- 5th European Conference on Integrated Optics, Paris, 26-28 April 1989, vol. 114, SPIE, (Washington, US), R.G. Walker et al.: "Guided wave 1.3/55mum wavelength duplexers in InGaAsP/InP", pp. 219-226.
- JOURNAL OF OPTICAL COMMUNICATIONS, vol. 8, no. 1, March 1987, Fachverlag Schiele & Schon, (Berlin, DE), M. Rocks: "Experiments in optical multiplex operation over single-mode optical fibers using commercial single-mode optical fiber coupler", pp. 22-24.

## Description

This invention relates to an optical duplexer formed as an integrated optical device.

It is proposed to provide, in an optical fiber communication system, an integrated optoelectronic transceiver chip which contains a laser transmitter and a photodetector receiver and a wavelength duplexer for separating incoming light (e.g. 1.53»m wavelength) from outgoing light (e.g. 1.3»m wavelength), the traffic in both directions being carried on the same optical fiber link which is coupled to the chip. A major problem with such an arrangement is that the signal being transmitted has a much higher intensity level than the received signal and therefore near-end crosstalk (reception of the outgoing signal by the photodetector) must be reduced as much as possible.

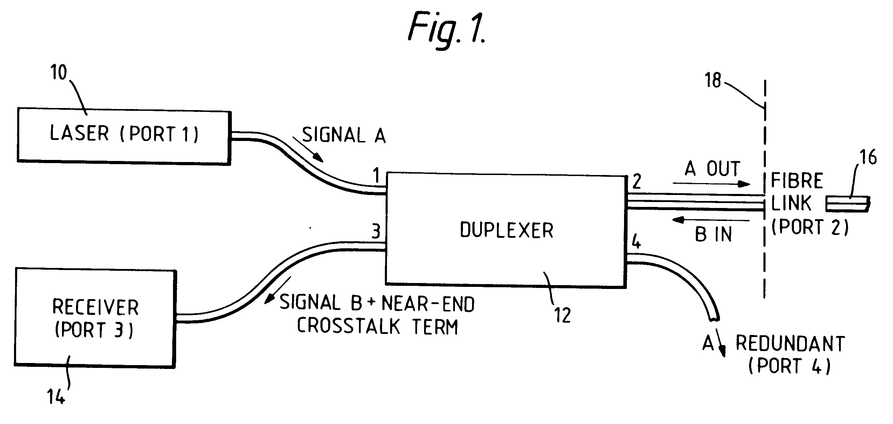

The problem may better be appreciated by reference to Figure 1, which shows essential elements of a known integrated optoelectronic transceiver chip. A laser transmitter 10 provides a signal A to port 1 of an optical duplexer device 12 while a photodetector receiver 14 is coupled to port 3 of device 12 to receive signal B. Light is transmitted (signal A) from an output port 2, which is coupled to an optical fiber link 16 at the edge 18 of the chip. In addition incoming light (signal B) is received from link 16 at port B. Duplexer 12 includes a redundant port 4. Practical duplexers, being passive, optically reciprocal devices invariably have a redundant fourth port which is complementary to Port 2. In practice, an undesired fraction of signal A crosses to Port 3 by reflection from the chip edge 18 back to port 2 and hence to port 3 while, by reciprocity, the same fraction of signal A at Port 1 will cross to Port 4.

Because of loss in the communication link it is likely that the local signal A will be of much greater magnitude than the remote signal B, which may be swamped, or at least degraded, if even a small fraction of signal A arrives at the local receiver. This is known as near-end crosstalk. Near-end crosstalk is caused by reflected light from the various discontinuities of which the most important is the interface at the edge of chip 18 between port 2 and fibre link 16.

It is an object of the present invention to provide an optical duplexer formed as an integrated optoelectronic device wherein problems of near-end crosstalk are reduced, in particular near-end crosstalk arising from unwanted reflection at the chip edge.

According to the invention there is provided an integrated optoelectronic transceiver circuit comprising, on a substrate, a transmitter device; a receiver device; and an optical duplexer device, said optical duplexer device comprising a first port connected to said transmitter device, a second port coupled by a first waveguide length formed on the substrate surface to a communication link for transmitting light from said transmitter device to said communication link, the interface between said first waveguide length and said communication link constituting a first reflective region, a third port connected to said receiver device for receiving light received from said communication link via said second port, and a fourth port, characterised in that said fourth port is coupled by a second waveguide length formed on the substrate surface to a second reflective region in such a way that light reflected back to the fourth port from the second reflective region has a phase shift of about π radians relative to radiation of the same wavelength reflected back to the second port from the first reflective region, whereby crosstalk ration (RTC) arising from light transmitted via the first and second ports being reflected from the first reflective region to said third port is cancelled or reduced by crosstalk radiation (RCT) arising from light transmitted via the first and fourth ports being reflected from the second reflective region to said third port.

Thus in accordance with the invention, unwanted reflections arising from a reflective interface at the communication link, which may be the edge of the optoelectronic chip and which is conducted back to the third port to create cross-talk, is cancelled wholly or in part by radiation reflected from the second reflective interface back to the fourth port and then conducted to the third port. In a practical situation, the first and second reflective interfaces will be regions of the chip edge which are close to one another and having similar reflection coefficients.

The optical duplexer may be of any suitable type having four ports in the manner set forth above; it may for example be a 50:50 beam-splitter; e.g. a half-silvered mirror or waveguide directional coupler, each with four optical ports. In each case only half of the transmitter light reaches Port 2, the remainder going to the redundant Port 4. Similarly, the received light is split between the receiver (Port 3) and the local transmitter (Port 1). The resultant 75% (-12dB_{electrical}) loss in a full system of two identical Transceiver modules is highly undesirable.

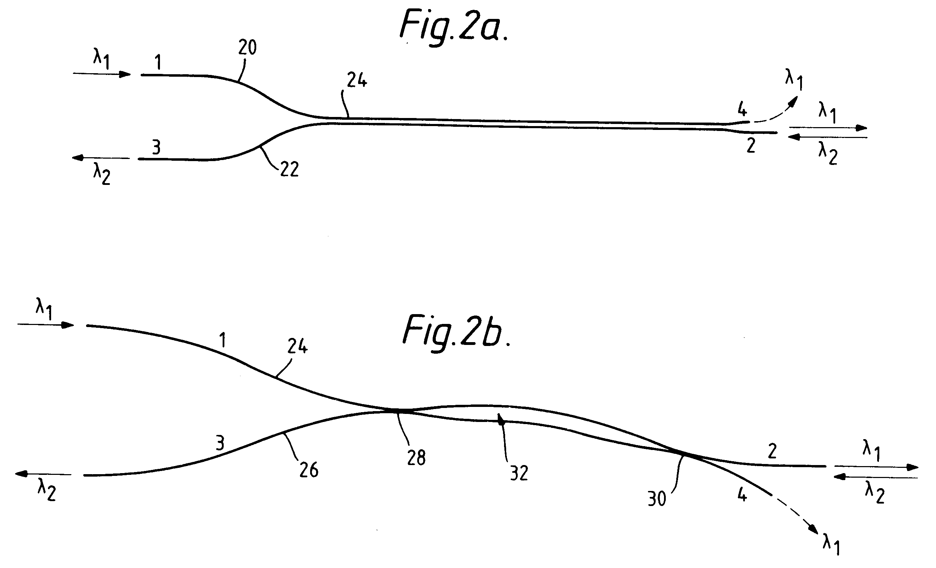

The preferred solution to this problem is to use wavelength diversity, designing a wavelength duplexer so that signal A at wavelength λ1 experiences one extreme of split-ratio while signal B at λ2 experiences the other extreme. If perfect, this scheme provides lossless, zero-crosstalk operation. There are many different types of wavelength duplexer, see for example Figure 2(a) in which radiation λ1 input to Port 1 is transmitted via Port 2 (and redundant Port 4) and radiation λ2 input to Port 2 is output via Port 3. The duplexer comprises two waveguides 20, 22 having a coupling region 24 in which the waveguides are close together. As preferred, the guided wave optical duplexer disclosed and claimed in our copending application EP-A-0366302 is employed. As shown in Figure 2(b) the guided-wave optical wavelength duplexer fabricated as an integrated optical device comprises first and second waveguides formed on the substrate surface, said first waveguide being coupled, respectively, by one of its ends to said first port and by its other end to said second port, and said second waveguide being coupled, respectively, by one of its ends to said third port and by its other end to said fourth port, said first and second waveguides being arranged in a first and a second coupler regions distant from each other to enable light to be transferred from one waveguide to the other at each coupler region, and the first and second waveguides between the first and second coupler the regions being distant from each other so as to prevent light transfer, and curved in the same general direction and having different optical path lengths, so that light of a first wavelength from the transmitter device connected to the first output is output through the second port to the communication link, and light of a second wavelength from the communication link connected to the second port is output through the third port to the receiver device.

EP-A-0366302 falls within the terms of EPC Article 54, paragraph 3.

In principle, orthogonal optical polarisation states can be used in the same way as wavelength diversity in a duplexer; however, current, standard optical fire does not maintain polarization, thus the received signal B state of polarization must be considered unknowable.

Practical duplexers will not be perfect: the unwanted cross-fraction may be from 1% to 10% and approximately R times this figure (where R is the reflected light at the interface) will arrive at the receiver. If R=1% - a good working figure for an anti-reflection (AR) coated Indium Phosphide facet - the crosstalk may still be unacceptably high.

A preferred embodiment of the invention will now be described with reference to the accompanying drawings wherein:-
Figure 1 is a schematic view of a prior art transceiver using an optical duplexer;
Figure 2 includes schematic views of optical duplexers, Figure 2a being a known wavelength selective directional coupler and Figure 2b being a wavelength selective interferometer as disclosed and claimed in our copending application EP-A-0 366 302;
Figure 3 is a conceptual view of the preferred embodiment of the optical duplexer in accordance with the invention; and,
Figure 4 is a schematic view of the preferred embodiment of the invention incorporating the interferometer described and claimed in our copending application EP-A-0 366 302.

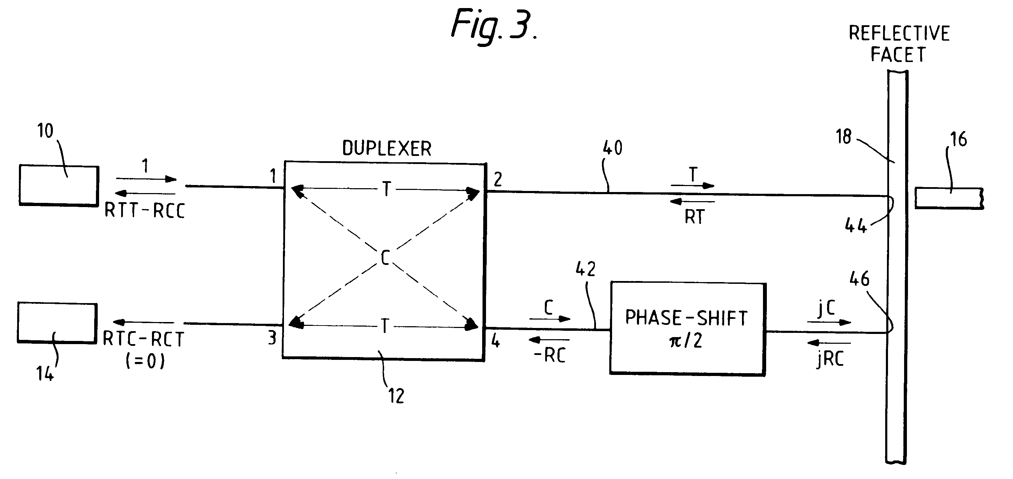

Referring now to the preferred embodiment shown in Figure 3, parts similar to those shown in Figure 1 are indicated by the same reference numbers. For light input at Port 1, the duplexer routes a 'through' fraction T to Port 2 and a 'cross' fraction C (ideally zero) to Port 4. C and T are amplitude transmission factors which apply to all similarly disposed pairs of ports. Reflected light at Port 4, if left to itself, is largely routed to Port 3, potentially increasing crosstalk; thus, it is usual to attempt to absorb or otherwise dispose of this light harmlessly.

In accordance with this invention, Port 4 is coupled to the output facet or chip edge 18 in the same way as Port 2 via waveguide lengths 40, 42 in adjacent chip edge regions 44, 46, so that both experience the same reflection coefficient - R (which may be about 1%). From Port 2, amplitude RT² appears back at the transmitter 10 at Port 1 while RTC appears at the receiver 14 (Port 3). This latter is the usual crosstalk term if Port 4 is terminated by an absorber. However, here Port 4 reflects similarly and the corresponding terms are RC² and RCT respectively.

Thus, two equal terms representing potential crosstalk appear at Port 3: i.e. RCT and RTC. In accordance with this invention these two terms are related by a minus not a plus sign so that all crosstalk is cancelled. It can be shown that this is achieved if the two output signals RTC and RCT from the duplexer at port 3 accumulate a 180° optical phase imbalance before arriving back after reflection; thus, the lengths of waveguide lengths 40, 42 leading from the duplexer to the facet 18 must be of slightly different length - δL - where δL represents 90° at λ1.

The following is noted:
1) Operation is independent of the amounts of R, C or T and applied equally to simple 50:50 couplers as to wavelength selective duplexers. However, loss will still be high in the former case.
2) All reflected light is sent back to the transmitter 10, which may be problematic for laser stability and H.F. noise if R is large. Thus, this technique does not eliminate the need for AR coatings but does limit how effective they need to be. It also obviates the need for tilting the facets with respect to the waveguides - a known method for losing reflected light but which makes fibre interfacing rather more difficult.
3) Phase accuracy requires that the waveguide angle with respect to a perfectly planar facet be accurately controlled. Sensitivity to the facet angle is reduced by keeping the outputs very close together.
4) The required 90° phase shift may be obtained either by tilting the facet slightly with respect to straight, parallel waveguides, or by the use of concentrically-curved waveguides terminating normal to the facet, as described below.

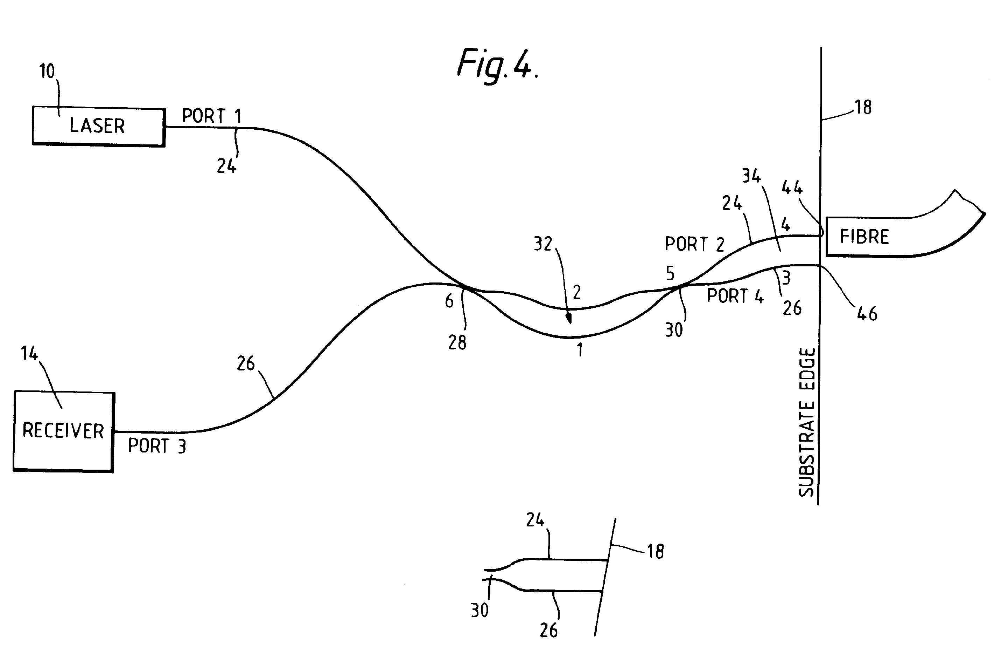

Figure 4 illustrates a practical implementation of this invention. It is particularly suited for use with the Mach-Zehnder duplexer using concentrically-curved phase-shift waveguides, as described in our copending application EP-A-0 366 302 and shown in Figure 2(b). Similar parts are indicated by similar reference numerals.

Thus laser 10 is coupled to Port 1 via waveguide 24 and receiver 14 is coupled to Port 3 via waveguide 26. Waveguide 24 and 26 are positioned closely adjacent one another in a first coupler region 28 and thereafter diverge from one another and are concentrically curved in a region 32 about a common centre until the waveguides converge subsequently at a second coupler region 30 in which the waveguides are closely spaced. In the region 32 between regions 28, 30, waveguide 26 has a longer length that waveguide 24 such as to provide 180° phase shift at wavelength λ1 but no phase shift at λ2. This implements a wavelength selective function.

Port 2 is provided by a section of waveguide 24 which proceeds from region 30 diverging from waveguide 26, which provides Port 4. The two waveguides are curved in a region 34 about a common centre and proceed to the chip substrate edge 18 which they meet in regions 44, 46, normal to the chip edge. Since these two regions 44, 46 are close together, the reflection coefficient R is the same for each region. The concentrically curved region 34 makes waveguide 24, slightly longer than waveguide 26 such that a net 90° phase shift is provided at wavelength λ1. Thus for light reflected from the substrate edge 18 back to coupler region 30, a net 180° phase shift is provided at wavelength λ1.

It may thus be seen that the present invention provides, at least in the preferred embodiment, a guided-wave optical duplexer so designed that light of a first specified wavelength and/or polarization input to Port 1 is substantially routed to the output Port 2, with the remainder going to the complementary Port 4. This is fabricated as an integrated optical device onto a substrate of suitable material: waveguides from Ports 2 and 4 lead to the substrate edge which is cleaved or polished, as appropriate. Means are provided to minimise reflections and to couple light from Port 2 into optical fibre. The duplexer is provided with the property that light of a second specified wavelength and/or polarization entering Port 2 from the fibre will be substantially routed to Port 3.

The waveguide lengths from Port 2 to the substrate edge and from Port 4 to the same edge are slightly different, the difference being equivalent to ±90° of optical phase at the first specified wavelength and polarization. It is of no consequence which is the longer of the two.

The required length difference may be achieved using straight, parallel waveguides of predetermined spacing and carefully controlled angle with respect to the substrate edge, as shown in the inset of Figure 4; alternatively the required length difference is achieved using concentrically curved waveguides of predetermined spacing, intersecting the substrate edge at right-angles.

The duplexer itself may be of the Mach-Zehnder variety and is a wavelength duplexer based on the use of concentrically-curved waveguides to precisely define small path-length differences.

## Claims

1. An integrated optoelectronic transceiver circuit comprising, on a substrate, a transmitter device (10); a receiver device (14); and an optical duplexer device (12), said optical duplexer device comprising a first port (1) connected to said transmitter device, a second port (2), coupled by a first waveguide length (40) formed on the substrate surface to a communication link (16), for transmitting light from said transmitter device to said communication link, the interface (44) between said first waveguide length (40) and said communication link (16) constituting a first reflective region, a third port (3) connected to said receiver device for receiving light received from said communication link via said second port, and a fourth port (4), characterised in that said fourth port (4) is coupled by a second waveguide length (42) formed on the substrate surface to a second reflective region (46) in such a way that light reflected back to the fourth port (4) from the second reflective region (46) has a phase shift of about π radians relative to radiation of the same wavelength reflected back to the second port (2) from the first reflective region (44), whereby crosstalk radiation (RTC) arising from light transmitted via the first and second ports being reflected from the first reflective region (44) to said third port (3) is cancelled or reduced by crosstalk radiation (RCT) arising from light transmitted via the first and fourth ports being reflected from the second reflective region (46) to said third port (3).

2. A transceiver circuit as claimed in Claim 1, wherein the duplexer (12) employs wavelength diversity.

3. A transceiver circuit as claimed in Claim 2, wherein the duplexer (12) comprises first and second waveguides (24,26) formed on the substrate surface, said first waveguide (24) being coupled, respectively, by one of its ends to said first port (1) and by its other end to said second port (2), and said second waveguide (26) being coupled, respectively, by one of its ends to said third port (3) and by its other end to said fourth port (4), said first and second waveguides being arranged in a first (28) and a second (30) coupler regions distant from each other to enable light to be transferred from one waveguide to the other at each coupler region, and the first and second waveguides between the first and second coupler regions being distant from each other so as to prevent light transfer, and curved in the same general direction and having different optical path lengths, so that light of a first wavelength from the transmitter device (10) connected to the first output (1) is output through the second port (2) to the communication link (16), and light of a second wavelength from the communication link (16) connected to the second port (2) is output through the third port (3) to the receiver device (14).

4. A transceiver circuit as claimed in any one of the preceding claims, wherein the first and second reflective regions (44,46) comprise adjacent areas of the edge (18) of the substrate of the integrated circuit.

5. A transceiver circuit as claimed in Claim 4, wherein the second port (2) is coupled to the substrate edge (18) and the communication link (16) by said first waveguide length (40) and the fourth port (4) is coupled to the substrate edge (18) by said second waveguide length (42), the first and second waveguide lengths (40,42) being different in length by an amount substantially equal to a 90° phase shift at the wavelength of transmitted light.

6. A transceiver circuit as claimed in Claim 5, wherein the first and second waveguide lengths (40,42) are curved in the same direction to achieve the required length difference.

7. A transceiver circuit as claimed in Claim 5, wherein the first and second waveguide lengths (40,42) are straight but are angled relative to the substrate edge (18) to achieve the required length difference.

## Patentansprüche

1. Integrierte optoelektronische Sender/Empfänger-Schaltung enthaltend, auf einem Substrat, eine Sendereinrichtung (10), eine Empfängereinrichtung (14) und eine optische Duplexereinrichtung (12), welche optische Duplexereinrichtung enthält einen ersten Port (1), der mit der Sendereinrichtung verbunden ist, einen zweiten Port (2), der über ein auf der Substratoberfläche ausgebildetes erstes Wellenleiterstück (40) mit einer Kommunikationsverbindung (16) zum Übertragen von Licht von der Sendereinrichtung zu der Kommunikationsverbindung gekoppelt ist, wobei die Schnittstelle (44) zwischen dem ersten Wellenleiterstück (40) und der Kommunikationsverbindung (16) einen ersten Reflexionsbereich darstellt, einen dritten Port (3), der mit der Empfängereinrichtung zum Empfangen von Licht, das über den zweiten Port von der Kommunikationsverbindung kommt, verbunden ist, und einen vierten Port (4),
**dadurch gekennzeichnet**,
daß der vierte Port (4) über ein auf der Substratoberfläche ausgebildetes zweites Wellenleiterstück (42) mit einem zweiten Reflexionsbereich (46) in einer solchen Weise gekoppelt ist, daß Licht, das vom zweiten Reflexionsbereich (46) zurück zum vierten Port (4) reflektiert wird, eine Phasenverschiebung von etwa π Radiant in bezug auf Strahlung derselben Wellenlänge hat, die vom ersten Reflexionsbereich (44) zurück zum zweiten Port (2) reflektiert wird, so daß Nebensprechstrahlung (RTC), die von Licht ausgeht, das über den ersten und zweiten Port übertragen wird, und vom ersten Reflexionsbereich (44) zum dritten Port (3) reflektiert wird, durch Nebensprechstrahlung (RCT), die von Licht ausgeht, das über den ersten und vierten Port übertragen wird, und vom zweiten Reflexionsbereich (46) zum dritten Port (3) reflektiert wird, gelöscht oder vermindert wird.

2. Sender/Empfänger-Schaltung nach Anspruch 1, bei der der Duplexer (12) Wellenlängendiversity verwendet.

3. Sender/Empfänger-Schaltung nach Anspruch 2, bei der der Duplexer (12) einen ersten und zweiten Wellenleiter (24,26) enthält, die auf der Substratoberfläche ausgebildet sind, welcher erste Wellenleiter (24) mit einem seiner Enden mit dem ersten Port (1) und mit seinem anderen Ende mit dem zweiten Port (2) gekoppelt ist und welcher zweite Wellenleiter (26) mit einem seiner Enden mit dem dritten Port (3) und mit seinem anderen Ende mit dem vierten Port (4) gekoppelt ist, der erste und zweite Wellenleiter in einem ersten (28) und einem davon beabstandeten zweiten (30) Koppelbereich angeordnet sind, um es zu ermöglichen, daß Licht vom einen Wellenleiter zum anderen in jedem Koppelbereich transferiert werden kann, und der erste und zweite Wellenleiter zwischen dem ersten und zweiten Koppelbereich so voneinander beabstandet sind, daß ein Lichttransfer verhindert ist, und in derselben generellen Richtung gekrümmt sind und unterschiedliche optische Bahnlängen haben, so daß Licht einer ersten Wellenlänge von der Sendereinrichtung (10), die mit dem ersten Port (1) verbunden ist, durch den zweiten Port (2) zur Kommunikationsverbindung (16) austritt und Licht einer zweiten Wellenlänge von der Kommunikationsverbindung (16), die mit dem zweiten Port (2) verbunden ist, durch den dritten Port (3) zur Empfängereinrichtung (14) austritt.

4. Sender/Empfänger-Schaltung nach irgendeinem der vorangegangenen Ansprüche, bei der der erste und zweite Reflexionsbereich (44, 46) aneinandergrenzende Bereiche der Kante (18) des Substrats der integrierten Schaltung enthält.

5. Sender/Empfänger-Schaltung nach Anspruch 4, bei der der zweite Port (2) über das erste Wellenleiterstück (40) mit der Substratkante (18) und der Kommunikationsverbindung (16) gekoppelt ist und der vierte Port (4) über das zweite Wellenleiterstück (42) mit der Substratkante (18) gekoppelt ist, wobei das erste und zweite Wellenleiterstück (40, 42) um ein Ausmaß, das im wesentlichen gleich einer 90°-Phasenverschiebung bei der Wellenlänge des ausgesandten Lichts ist, von unterschiedlicher Länge sind.

6. Sender/Empfänger-Schaltung nach Anspruch 5, bei der das erste und zweite Wellenleiterstück (40, 42) in derselben Richtung gekrümmt sind, um die erforderliche Längendifferenz zu erhalten.

7. Sender/Empfänger-Schaltung nach Anspruch 5, bei der das erste und zweite Wellenleiterstück (40, 42) gerade sind, jedoch unter Bezugnahme auf die Substratkante (18) unter einem Winkel verlaufen, um die erforderliche Längendifferenz zu erhalten.

## Revendications

1. Circuit émetteur-récepteur optoélectronique intégré, comprenant, sur un substrat, un dispositif émetteur (10), un dispositif récepteur (14), et un dispositif duplexeur optique (12), le dispositif duplexeur optique ayant une première voie (1) connectée au dispositif émetteur, une seconde voie (2) couplée par un premier tronçon de guide d'onde (40) formé à la surface du substrat à une liaison (16) de communication pour la transmission de lumière du dispositif émetteur à la liaison de communication, l'interface (44) du premier tronçon de guide d'onde (40) et de la liaison de communication (16) constituant une première région réfléchissante, une troisième voie (3) connectée au dispositif récepteur et destinée à recevoir la lumière reçue de la liaison de communication par l'intermédiaire de la seconde voie, et une quatrième voie (4), caractérisé en ce que la quatrième voie (4) est couplée par un second tronçon de guide d'onde (42) formé à la surface du substrat à une seconde région réfléchissante (46) de manière que la lumière réfléchie vers la quatrième voie (4) par la seconde région réfléchissante (46) ait un déphasage d'environ π radians par rapport au rayonnement à la même longueur d'onde renvoyé vers la seconde voie (2) par la première région réfléchissante (44), si bien que le rayonnement de diaphonie (RTC) dû à la réflexion de la lumière transmise par la première et la seconde voie depuis la première région réfléchissante (44) vers la troisième voie (3) est compensé ou réduit par le rayonnement de diaphonie (RCT) dû à la réflexion de la lumière transmise par la première et la quatrième voie depuis la seconde région réfléchissante (46) vers la troisième voie (3).

2. Circuit émetteur-récepteur selon la revendication 1, dans lequel le duplexeur (12) utilise une diversité en longueur d'onde.

3. Circuit émetteur-récepteur selon la revendication 2, dans lequel le duplexeur (12) comprend un premier et un second guide d'onde (24, 26) formés sur la surface du substrat, le premier guide d'onde (24) étant couplé respectivement par une première de ses extrémités à la première voie (1) et par son autre extrémité à la seconde voie (2), et le second guide d'onde (26) étant couplé respectivement par une première de ses extrémités à la troisième voie (3) et par son autre extrémité à la quatrième voie (4), le premier et le second guide d'onde étant disposés dans une première (28) et une seconde (30) région de coupleur distantes l'une de l'autre afin que la lumière puisse être transférée d'un guide d'onde à l'autre dans chaque région de coupleur, et le premier et le second guide d'onde, entre la première et la seconde région de coupleur, étant distants l'un de l'autre afin qu'ils empêchent le transfert de lumière, étant courbés dans la même direction générale et ayant des longueurs différentes de trajet optique, si bien que la lumière à une première longueur d'onde, provenant du dispositif émetteur (10) connecté à la première sortie (1), est transmise par la seconde voie (2) à la liaison de communication (16), et la lumière à une seconde longueur d'onde, provenant de la liaison de communication (16) connectée à la seconde voie (2), est transmise par la troisième voie (3) au dispositif récepteur (14).

4. Circuit émetteur-récepteur selon l'une quelconque des revendications précédentes, dans lequel la première et la seconde région réfléchissante (44, 46) sont des zones adjacentes du bord (18) du substrat du circuit intégré.

5. Circuit émetteur-récepteur selon la revendication 4, dans lequel la seconde voie (2) est couplée au bord du substrat (18) et à la liaison de communication (16) par le premier tronçon de guide d'onde (40), et la quatrième voie (4) est couplée au bord du substrat (18) par le second tronçon de guide d'onde (42), le premier et le second tronçon de guide d'onde (40, 42) ayant des longueurs qui diffèrent d'une quantité pratiquement égale à un déphasage de 90° à la longueur d'onde de la lumière transmise.

6. Circuit émetteur-récepteur selon la revendication 5, dans lequel le premier et le second tronçon de guide d'onde (40, 42) sont courbés dans le même sans afin qu'ils donnent la différence nécessaire de longueur.

7. Circuit émetteur-récepteur selon la revendication 5, dans lequel le premier et le second tronçon de guide (40, 42) sont rectilignes mais inclinés par rapport au bord du substrat (18) afin qu'ils donnent la différence nécessaire de longueur.
